Europäisches Patentamt

European Patent Office

Office européen des brevets

(19)

(11) **EP 0 659 875 B1**

(12) **FASCICULE DE BREVET EUROPEEN**

(45) Date de publication et mention
de la délivrance du brevet:
**08.08.2001 Bulletin 2001/32**

(51) Int Cl.⁷: **C11D 3/37**, C08G 69/10,
C08G 73/10

(21) Numéro de dépôt: **94402444.7**

(22) Date de dépôt: **28.10.1994**

(54) **Procédé de préparation de polyimides ou de leurs hydrolysats polypeptidiques biodégradables**

Verfahren zur Herstellung von Polyimiden oder ihren biologisch abbaubauren polypeptidischen Hydrolysaten

Process for preparing polyimides or their biodegradable polypeptidic hydrolysats

(84) Etats contractants désignés:
**AT BE CH DE DK ES FR GB GR IE IT LI LU NL PT SE**

(30) Priorité: **24.11.1993 FR 9314042**
**24.11.1993 FR 9314043**

(43) Date de publication de la demande:
**28.06.1995 Bulletin 1995/26**

(73) Titulaire: **RHODIA CHIMIE**
**92408 Courbevoie Cédex (FR)**

(72) Inventeurs:
• **Bernard, Jean-Marie**
**F-69440 Mornant (FR)**
• **Ponce, Arnaud**
**F-93300 Aubervilliers (FR)**
• **Lepage, Jean-Luc**
**F-69340 Francheville (FR)**

• **Tournilhac, Florence**
**F-75011 Paris (FR)**

(74) Mandataire: **Fabre, Madeleine-France et al**
**Rhodia Services,**
**Direction de la Propriété Industrielle,**
**40, rue de la Haie-Coq**
**93306 Aubervilliers Cedex (FR)**

(56) Documents cités:
**EP-A- 0 130 935      EP-A- 0 454 126**
**EP-A- 0 511 037      EP-A- 0 621 300**
**EP-A- 0 640 641      EP-A- 0 644 257**
**WO-A-87/03891      DE-A- 2 461 350**
**FR-A- 2 059 475      GB-A- 2 246 786**
**US-A- 3 052 655**

• **JOURNAL OF MEDICINAL CHEMISTRY, vol. 16, no. 8, Août 1973 pages 893-897, PAOLO NERI ET AL.**

**Description**

La présente invention a pour objet un procédé de préparation de polyimides, polysuccinimides notamment, ou de leurs hydrolysats polypeptidiques naturellement biodégradables à au moins 80%. Elle vise également l'utilisation des polyimides ou des hydrolysats polypeptidiques ainsi obtenus dans les compositions détergentes, ainsi que les compositions détergentes contenant lesdits polyimides ou leurs hydrolysats comme agents "builder" ou "cobuilder".

Il est connu d'obtenir des polyimides par polycondensation thermique d'aminoacides, notamment de l'acide aspartique, dont les hydrolysats polypeptidiques présentent une biodégradabilité en milieu naturel de l'ordre de 75% (EP-A-511037).

La demanderesse a maintenant trouvé un procédé permettant d'obtenir des polyimides, notamment des polyimides dérivés de l'acide aspartique, dont les hydrolysats polypeptidiques sont biodégradables à au moins 80% et de préférence à au moins 85%.

Selon l'invention, il s'agit d'un procédé de préparation de polyimides ou de leurs hydrolysats polypeptidiques de biodégradabilité d'au moins 80% *(selon la Norme AFNOR T90-312 ou la Norme internationale ISO 7827),* de préférence d'au moins 85%, par polymérisation thermique **en** *masse* d'au moins un aminoacide, *en présence d'au moins un "catalyseur acide" choisi parmi*

- . *les acides sulfuriques, nitrique, phosphoreux, sulfureux, silicique, sulfonique, les acides sulfoniques organiques contenant moins de 50 atomes de carbone, les acides phosphoniques organiques, les acides organiques carboxyliques présentant un $pk_a$ inférieur ou égal à 5 ;*
- . *les précurseurs de ces acides ;*
- . *les sels de ces acides et d'un aminoacide semblable à ou différent de celui ou ceux mis en oeuvre ;*
- . *les sels de ces acides et d'un polyimide dérivé de la polycondensation d'au moins un aminoacide semblable à ou différent de celui ou ceux mis en oeuvre ;*
- . *les précurseurs de l'acide chlorhydrique ou fluorhydrique*
- . *les sels de l'acide chlorhydrique et d'un aminoacide semblable à ou différent de celui ou ceux mis en oeuvre, lorsque l'aminoacide à polycondenser est autre que l'acide glutamique ;*
- . *les sels de l'acide chlorhydrique et d'un polyimide dérivé de la polycondensation d'au moins un aminoacide semblable à ou différent de celui ou ceux mis en oeuvre;*
- . *les sels acides des acides sulfurique, phosphorique ou phosphoreux ou leurs précurseurs;*
- . *les précurseurs d'acide phosphorique autres que l'anhydride phosphorique ou les acides polyphosphoriques ;*
- . *et les acides de Lewis ;*

puis éventuellement hydrolyse,
ledit procédé étant caractérisé en ce que l'étape de polycondensation thermique est réalisée *avec un milieu réactionnel restant sous forme pulvérulente ou friable pendant toute la durée de l'opération de polycondensation, milieu réactionnel dans lequel le "catalyseur acide" a été réparti de manière homogène, par*

- - *empâtage d'un mélange d'aminoacide et de catalyseur acide solide ou liquide par de l'eau (ou tout autre diluant liquide volatil), élimination de l'eau (ou du diluant) par évaporation sous vide ou à pression atmosphérique, puis broyage de la masse obtenue ;*
- - *ou dans le cas où l'aminoacide est de l'acide aspartique, préparation de l'acide aspartique par réaction d'un acide organique ou inorganique et de l'aspartate d'ammonium, avec incorporation, par cristallisation, du "catalyseur acide" solide au cours de l'opération de précipitation de l'acide aspartique ;*

selon un rapport molaire "catalyseur acide" / aminoacide d'au moins 0,001, de préférence de l'ordre de 0,005 à 10 et tout particulièrement de l'ordre de 0,01 à 5.

On entend par précurseur d'acide ou de sel acide tout produit qui libère au moins un des acides ou sels acides ci-dessus dans les conditions opératoires de polycondensation ; cette libération peut être obtenue grâce à la température ou par action de l'eau se formant in situ.

Dans la définition de la mole de "catalyseur acide" , on prendra comme entité élémentaire le proton dans le cas des acides, sels acides ou leurs précurseurs ; dans le cas d'un sel d'aminoacide ou de polyimide, l'entité élémentaire considérée sera la fonction $NH^{3+}$; dans le cas des acides de Lewis l'entité élémentaire considérée sera la molécule.

Dans la définition de la mole d'aminoacide, on prendra comme entité élémentaire la molécule.

On entendra ci-après par "acides" les acides , les précurseurs d'acide ou de sel acide, les acides de Lewis et les sels acides ne dérivant pas d'aminoacide ci-dessus cités comme catalyseurs ; on entendra par "sels d'aminoacide" ou "sels d'acide aspartique", les sels dérivés d'acides minéraux ou organiques et d'aminoacide ou de l'acide aspartique ; on entendra par "sels de polyimide" les sels dérivés d'acides minéraux ou organiques et d'un polyimide dérivé de la polycondensation d'aminoacide.

Parmi les aminoacides pouvant être mis en oeuvre pour réaliser le procédé de l'invention, on peut citer l'acide aspartique ou l'acide glutamique pris seuls ou en mélange entre eux dans des proportions quelconques ou en mélange avec un aminoacide autre (par exemple jusqu'à 15% en poids, de préférence moins de 5% en poids de glycine, alanine, valine, leucine, isoleucine, phenylalanine, méthionine, histidine, proline, lysine, sérine, thréonine, cysteine, ...) L'aminoacide préféré est l'acide aspartique. Lorsqu'un "sel d'aminoacide" est mis en oeuvre, celui-ci est de préférence un "sel d'acide aspartique".

Parmi les "catalyseurs acides" pouvant être mis en oeuvre, on peut citer

. les acides sulfoniques tels que méthane sulfonique, benzène sulfonique, trifluorométhanesulfonique, dodécylbenzènesulfonique, paratoluènesulfonique, l'acide cysteique (acide aminé portant une fonction sulfonique) ...

. l'acide sulfurique anhydre ou hydraté, l'oléum, les sulfates acides de potassium, lithium, sodium ou d'ammonium quaternaire, $SO_3$, ...

. le sulfate d'ammonium

. les mélanges sulfate neutre de métal alcalin / acide sulfurique, sulfate neutre de métal alcalin ou alcalino-terreux / acide phosphorique ou pyrophosphorique, selon un rapport molaire acide/sel neutre de l'ordre de 0,5/1 à 10/1, de préférence de l'ordre de 1/1 à 3/1

. les hydrogénophosphates de potassium , sodium, lithium ou d'ammonium quaternaire ...

. HCl, $PCl_3$ , $PCl_5$, $POCl_3$, chlorure de cyanuryle

. les halogénosilanes tels que $SiCl_4$ , $CH_3SiCl_3$ ...

. l'acide salicylique, les acides chloracétiques ...

. les acides phosphoniques tels que phosphométhylglycine, acide éthylphosphonique ...

. le chlorhydrate de l'acide aspartique (lorsque l'aminoacide à polycondenser est autre que l'acide glutamique), les sels de l'acide aspartique et de l'acide sulfurique, méthane sulfonique, paratoluène sulfonique ...

. le chlorhydrate de polysuccinimide (chlorhydrate de l'acide polyanhydroaspartique) ...

. $AlCl_3$, $BF_3$, $ZnCl_2$

L'opération de polycondensation thermique peut être réalisée à une température de l'ordre de 100 à 250°C, de préférence à une température de l'ordre de 150 à 220°C. Ladite opération peut être réalisée à une température choisie ou suivant un profil de température préétabli.

Cette opération de polycondensation thermique peut être réalisée en masse à pression atmosphérique, sous pression (de préférence jusqu'à 20 bar) ou sous vide (de préférence supérieur à 1mbar).

Une variante de réalisation de l'opération de polycondensation thermique en masse consiste à mettre en oeuvre comme seul constituant de la réaction un "sel d'aminoacide" en lieu et place d'un mélange aminoacide / "catalyseur acide" ; ledit "sel d'aminoacide" est donc alors présent en masse ou en suspension dans un solvant.

L'opération de polycondensation peut être réalisée d'une manière industrielle à l'aide d'un appareillage simple, et ce sans prise en masse du milieu, en présence d'une quantité relativement faible de "catalyseur acide" solide ou liquide.

La quantité de catalyseur pouvant être mise en oeuvre est fonction de la nature dudit catalyseur. Ainsi lorsque que le "catalyseur acide" est constitué d'un sel acide ou d'un précurseur de sel acide, un rapport molaire "catalyseur acide" / aminoacide de l'ordre de 0,001 à 0,15, de préférence de l'ordre de 0,005 à 0,15, est bien adapté ; lorsque que le "catalyseur acide" est différent d'un sel acide ou d'un précurseur de sel acide, un rapport molaire "catalyseur acide" / aminoacide de l'ordre de 0,001 à 0,05, de préférence de l'ordre de 0,005 à 0,05, convient.

Le polyimide obtenu selon le procédé de l'invention peut être, si nécessaire, séparé, filtré, purifié et séché. Suivant la nature du "catalyseur acide" et du milieu, le catalyseur peut être si nécessaire séparé du polyimide par lavage à l'eau ou à l'aide d'un solvant dudit "catalyseur acide" et non solvant du polyimide.

Le polyimide peut être purifié par solubilisation à l'aide d'un solvant polaire aprotique (diméthylformamide, formamide, diméthylsulfoxyde...) puis reprécipitation à l'aide d'un composé non solvant dudit polyimide (eau, éther, éthanol, acétone ...)

Le polyimide obtenu , séparé ou non, peut ensuite, être hydrolysé de préférence par addition d'un agent basique (base alcaline, alcalino-terreuse, carbonate alcalin ou alcalino-terreux ...) en présence d'eau si nécessaire, en milieu homogène ou biphasique ; dans le cas du polysuccinimide dérivé de l'acide aspartique, l'hydrolysat ainsi obtenu est constitué de polyaspartate (de sodium par exemple).

La forme acide de l'hydrolysat peut être obtenue par exemple par neutralisation du sel obtenu ci-dessus par hydrolyse alcaline, à l'aide d'un acide organique ou minéral (HCl notamment) ; dans le cas du polysuccinimide dérivé de l'acide aspartique, l'hydrolysat ainsi obtenu est constitué d'acide polyaspartique.

On entend par "hydrolysat", selon l'invention, le produit obtenu par hydrolyse (par action de l'eau) partielle ou totale du polyimide formé ; cette hydrolyse conduit par ouverture des cycles imides, à la formation de fonctions amides d'une part et de fonctions acides carboxyliques (acides polypeptidiques) ou sels d'acides carboxyliques d'autre part (sels polypeptidiques).

Les polyimides ou leurs hydrolysats polypeptidiques préparés selon le procédé de l'invention, peuvent être utilisés notamment dans le domaine de la détergence.

La présente invention a donc également pour objet une composition détergente contenant un polyimide tel qu'obtenu selon le procédé ci-dessus décrit, polyimide susceptible d'engendrer par hydrolyse au sein du milieu lessiviel un "builder" polypeptidique biodégradable à au moins 80%, de préférence à au moins 85%, ou un hydrolysat dudit polyimide, hydrolysat se présentant sous forme d'un sel ou d'un acide polypeptidique biodégradable à au moins 80%, de préférence à au moins 85%.

On entend par "builder" tout constituant qui améliore les performances des agents de surface d'une composition détergente. D'une manière générale, un "builder" possède de multiples fonctions.

- il assure au sein d'un milieu lessiviel l'enlèvement des ions indésirables, notamment alcalino-terreux (calcium, magnésium), par séquestration, complexation ou précipitation pour prévenir la précipitation des tensio-actifs anioniques,
- il apporte une réserve d'alcalinité et de force ionique,
- il maintient en suspension les salissures extraites,
- il empêche l'incrustation minérale du linge.

Des compositions détergentes contenant un polyimide obtenu notamment par polycondensation de l'acide aspartique, susceptible d'engendrer par hydrolyse au sein du milieu lessiviel un "builder" polypeptidique, ou contenant un "builder" polyaminoacide polypeptidique, sont déjà connues (EP-A-511037 et EP-A-454126). Il a été constaté que les hydrolysats des polysuccinimides obtenus par polycondensation de l'acide aspartique, mis en oeuvre dans ces compositions présente une biodégradabilité en milieu naturel ne dépassant généralement pas 75% (EP-A-511 037).

Les compositions détergentes selon l'invention présentent d'excellentes propriétés de détergence primaire et secondaire.

Par composition détergente, on désigne selon l'invention les lessives lave-linge, les lessives lave-vaisselle ou tout autre produit de lavage à usage ménager.

On entend par "bain lessiviel" ou "milieu lessiviel" la solution aqueuse de lessive (composition détergente) présente dans la machine à laver au cours des cycles de lavage ; la quantité de lessive présente est celle préconisée par le fabriquant ; celle-ci est généralement inférieure à 20g/litre ; le pH d'une telle solution est supérieur à 9.

*Ledit* polyimide présente une densité de charge $COO^-$ pouvant aller de 0 à $5 \times 10^{-4}$ mole/g de polymère et est susceptible d'acquérir dans le bain lessiviel une densité de charge $COO^-$ au moins égale à $10^{-3}$ mole/g de polymère.

Les polyimides ou leurs hydrolysats, entrant dans la composition de l'invention, peuvent présenter une masse moléculaire moyenne en poids de l'ordre de 2000 à $10^7$ et généralement de l'ordre de 3500 à 60000.

La quantité de polyimide ou d'hydrolysat dudit polyimide entrant dans la composition détergente faisant l'objet de l'invention peut aller de 0,2 à 80%, de préférence de 2 à 10% du poids de ladite composition détergente.

A côté de ce polyimide ou hydrolysat de polyimide, est présent, dans la composition détergente, au moins un agent tensio-actif, en quantité pouvant aller de 2 à 50%, de préférence de 6 à 30%, du poids de ladite composition détergente.

Parmi les agents tensio-actifs entrant dans la composition détergente faisant l'objet de l'invention, on peut citer :

- les agents tensio-actifs anioniques du type savons et métaux alcalins (sels alcalins d'acides gras en $C_8$ - $C_{24}$), sulfonates alcalins (alcoylbenzène sulfonates en $C_{8-13}$, alcoylsulfonates en $C_{12}$ - $C_{16}$, alcools gras en $C_6$ - $C_{16}$ sulfatés, alkylphénols en $C_8$ - $C_{13}$ sulfatés), les sulfosuccinates alcalins (alcoylsulfosuccinates en $C_{12}$ - $C_{16}$) ...
- les agents tensio-actifs non ioniques du type alcoylphénols en $C_6$ - $C_{12}$ polyoxyéthylénés, alcools aliphatiques en $C_8$ - $C_{22}$ oxyéthylénés, les copolymères bloc oxyde d'éthylène - oxyde de propylène, les amides carboxyliques éventuellement polyoxyéthylénés ...
- les agents tensio-actifs amphotères du type alcoyldiméthylbétaïnes ...
- les agents tensio-actifs catoniques du type chlorures ou bromures d'alkyltriméthylammonium, d'alkyldiméthylammonium ...

Divers constituants peuvent en outre être présents dans la composition détergente de l'invention afin d'obtenir des lessives ou des produits de nettoyage en poudre.

Peuvent ainsi être en outre présents dans la composition détergente ci-dessus décrite :

- des "builders" du type :

  . phosphates à raison de moins de 25% du poids total de formulation,
  . zéolithes jusqu'à environ 40% du poids total de formulation,
  . carbonate de sodium jusqu'à environ 80% du poids total de formulation,
  . silicates ou cogranulés de silicate et de carbonate de sodium jusqu'à environ 40% du poids total de formulation,
  . acide nitriloacétique jusqu'à environ 10% du poids total de formulation,
  . acide citrique, acide tartrique jusqu'à environ 20% du poids total de formulation, la quantité totale de "builder" correspondant à environ 0,2 à 80%, de préférence de 20 à 45% du poids total de ladite composition détergente,

- des agents de blanchiment du type perborates, chloroisocyanates, N, N, N', N' - tétraacétyléthylènediamine (TAED) jusqu'à environ 30% du poids total de ladite composition détergente,
- des agents anti-redéposition du type carboxyméthylcellulose, méthylcellulose, copolymères polyéthylène téréphtalate - polyoxyéthylène téréphtalate présentant un rapport molaire polyéthylène téréphtalate/polyoxyéthylène téréphtalate de 25/75 à 90/10, de préférence de 50/50 à 90/10 dérivés de polyethylène glycol de masse molaire de l'ordre de 600 à 5000, en quantités pouvant aller jusqu'à environ 5% du poids total de ladite composition détergente,
- des agents anti-incrustation du type copolymères d'acide acrylique et d'anhydre maléïque en quantité pouvant aller jusqu'à 10% environ du poids total de ladite composition détergente,
- des charges du type sulfate de sodium en quantité pouvant aller jusqu'à 50% du poids total de ladite composition détergente.

La composition détergente faisant l'objet de l'invention présente une bonne efficacité que ce soit en détergence primaire ou en détergence secondaire.

En outre, l'incorporation du polyimide tel que préparé ou son hydrolysat garantit à la composition détergente revendiquée une biodégradabilité totale (au moins 80%, de préférence au moins 85%) et facile de ce composé en sortie de machine à laver, lors des rejets en milieu naturel.

Les exemples suivants sont donnés à titre indicatif et ne peuvent être considérés comme une limite du domaine et de l'esprit de l'invention.

L'indice de viscosité (IV) donné dans ces exemples est mesuré à l'aide d'un viscosimètre capillaire SCHOTT AVS 350 à partir d'une quantité de polysuccimide (PSI) mis en solution dans de la soude 0,5N de manière à avoir une concentration de 0,002 g/ml à une température de 25°C.

Dans ces exemples la biodégradabilité des hydrolysats est mesurée selon la norme AFNOR T90-312 (en conformité avec la norme internationale ISO 7827 du 15 octobre 1984).

Le test est réalisé à partir :

- d'un inoculum obtenu par filtration d'eau d'entrée de la station urbaine de Saint Germain au Mont d'Or (Rhône), tel quel ou après adaptation
- d'un milieu d'essai contenant $4 \times 10^5$ bactéries/ml
- d'une quantité de produit à tester telle que le milieu d'essai contienne une concentration en carbone organique de de l'ordre de 40ml/g.

Le taux de biodégradabilité est mesuré en fonction du temps dans les conditions de rejet en eau de rivière.

Pour cette mesure les échantillons testés ont été obtenus par hydrolyse par une solution diluée de soude des polysuccinimides préparés, jusqu'à obtenir une solution à 6% environ en polyaspartate de sodium, de pH de l'ordre de 9 à 11.

Le niveau de biodégradabilité est caractérisé par les deux paramètres suivants :

. le taux maximum de biodégradation (TMB)
. le temps nécessaire pour passer d'un taux de biodégradation de 10% à un taux de 90% du taux maximum de biodégradation (t 10-90).

Mesure de la coloration selon la méthode HUNTER Lab

La coloration des poudres de polysuccinimides ou de leurs hydrolysats, est déterminée par mesure sur un spectro-colorimètre ACS SPECTRO-SENSOR II®.

- Conditions de mesure :

  . illuminant : D 65

. angle d'observation : 2°

Les 3 valeurs mesurées sont

. L : Luminance qui varie entre 0 (noir) et 100 (blanc)
. a : Coloration rouge (a positif) / vert (a négatif)
. b : Coloration jaune (b positif) / bleu (b négatif)

Ces valeurs sont calculées, à partir des mesures selon les formules

$$L = 100 \ (Y/Yo)^{1/2} \qquad a = Ka \ (X/Xo-Y/Yo) \ / \ (Y/Yo)^{1/2} \qquad b = Kb \ (Y/Yo-Z/Zo) \ / \ (Y/Yo)^{1/2}$$

X, Y, Z : valeurs tristimuli correspondant aux 3 couleurs primaires obtenues avec l'échantillon ;
Xo, Yo, Zo : valeurs tristimuli du diffuseur parfait de la source utilisée ;
Ka, Kb : coefficients pour la source utilisée.

**Exemples 1 - 3.**

On prépare un mélange obtenu par

- incorporation de 10 parties en poids d'un mélange $H_2SO_4$ / $K_2SO_4$ selon un rapport donné au tableau 4, dans 90 parties en poids d'acide L aspartique
- puis homogénéisation du milieu par empâtage à l'aide de 150 parties en poids d'eau, et évaporation de l'eau (40°C, 6000 Pa.) jusqu'à élimination totale de l'eau
- et broyage.

On introduit environ 53g de la poudre obtenue dans un ballon d'évaporateur rotatif de 250ml préchauffé à 200°C. On récupère après polycondensation pendant 6 h à 200°C, sans lavage à l'eau, un PSI dont les caractéristiques figurent au tableau 1.

**Exemple 2**

On prépare un milieu pulvérulent par

- empâtage de

  . 50g d'acide aspartique
  . 2,6g de $KHSO_4$

  à l'aide de 80g d'eau, sur plateau émaillé
- évaporation de l'eau à 80°C sous vide (6000 Pa.)
- et broyage à l'aide d'un broyeur à couteaux.

On introduit 50,6g de poudre dans un ballon d'évaporateur rotatif de 250ml.
L'opération de polycondensation est réalisée sous pression atmosphérique pendant 6 heures à une température de bain de 200°C. Le milieu reste pulvérulent pendant toute la durée de l'opération de polycondensation.
On récupère 42,3g de produit, ce qui correspond à un rendement de 63% en PSI.
Le produit présente un indice de viscosité IV =11,3ml/g et une coloration HUNTER

L =90,4
a =-2,2
b =9,8

**Exemple 5**

On prépare un milieu pulvérulent par

- empâtage de

  . 300g d'acide aspartique
  . 33g de KHSO$_4$

  à l'aide de 240g d'eau sur plateau émaillé
- évaporation de l'eau à 80°C sous vide (6000 Pa.)
- et broyage à l'aide d'un broyeur à couteaux.

On introduit 247,6g de poudre dans un ballon d'évaporateur rotatif de 1 litre.

L'opération de polycondensation est réalisée sous pression atmosphérique pendant 6 heures à une température de bain de 200°C. Le milieu reste pulvérulent pendant toute l'opération de polycondensation.

Le produit obtenu est lavé avec 3x6 litres d'eau , puis séché sous vide (5h à 6000 Pa et 100°C)

On récupère 130,1g de PSI, ce qui correspond à un rendement de 80%.

Le produit présente un indice de viscosité IV =12,0ml/g et une coloration HUNTER

L =94,2
a =-0,3
b=6,5

TABLEAU 1

| ex | H$_2$SO$_4$/ K$_2$SO$_4$ | milieu | évolution du milieu | RR | IV | couleur | | |
|----|----|----|----|----|----|----|----|----|
| | (molaire) | (g) | | (%) | (ml/g) | L | a | b |
| 1 | 1 | 53,2 | poudre | 86 | 11,40 | 91,9 | 0,6 | 9,3 |
| 2 | 3 | 53,2 | milieu friable | 93 | 9,48 | 90,1 | -0,3 | 10,9 |
| 3 | 2 | 53,4 | milieu friable | 90 | 11,00 | 91,1 | -0,2 | 9,5 |

**Revendications**

1. Procédé de préparation de polyimides ou de leurs hydrolysats polypeptidiques de biodégradabilité d'au moins 80% (*selon la Norme AFNOR T90-312 ou la Norme internationale ISO* 7827), par polymérisation thermique *en masse* d'au moins un aminoacide, *en présence d'au moins un "catalyseur acide" choisi parmi*

   . *les acides sulfuriques, nitrique, phosphoreux, sulfureux, silicique, sulfonique, les acides sulfoniques organiques contenant moins de 50 atomes de carbone, les acides phosphoniques organiques,* **les acides organiques carboxyliques présentant un pk$_a$ inférieur ou égal à 5 ;**
   . *les précurseurs de ces acides ;*
   . *les sels de ces acides et d'un aminoacide semblable à ou différent de celui ou ceux mis en oeuvre ;*
   . *les sels de ces acides et d'un polyimide dérivé de la polycondensation d'au moins un aminoacide semblable à ou différent de celui ou ceux mis en oeuvre ;*
   . <u>*les*</u> *précurseurs* <u>*de l'acide chlorhydrique ou fluorhydrique*</u>
   . *les sels de l'acide chlorhydrique et d'un aminoacide semblable à ou différent de celui ou* ceux *mis en oeuvre, lorsque l'aminoacide à polycondenser est autre que l'acide glutamique ;*
   . *les sels de l'acide chlorhydrique et d'un polyimide dérivé de la polycondensation d'au moins un aminoacide semblable à ou différent de celui ou ceux mis* en *oeuvre;*
   . *les sels acides des acides sulfurique, phosphorique ou phosphoreux ou leurs précurseurs;*
   . *les précurseurs d'acide phosphorique autres que l'anhydride phosphorique ou les acides polyphosphoriques ;*
   . *et les acides de Lewis ;*

   puis éventuellement hydrolyse,

   ledit procédé étant caractérisé en ce que l'étape de polycondensation thermique est réalisée *avec un milieu réactionnel restant sous forme pulvérulente ou friable pendant toute la durée de l'opération de polycondensation, milieu réactionnel dans lequel le "catalyseur acide"* <u>*a été*</u> *réparti de manière homogène, par*

- *empâtage d'un mélange d'aminoacide et de catalyseur acide solide ou liquide par de l'eau (ou tout autre diluant liquide volatil), élimination de l'eau (ou du diluant) par évaporation sous vide ou à pression atmosphérique, puis broyage de la masse obtenue ;*
- *ou dans le cas où l'aminoacide est de l'acide aspartique, préparation de l'acide aspartique par réaction d'un* <u>*acide organique ou inorganique et de l'aspartate d'ammonium, avec incorporation, par cristallisation, du "ca-*</u> <u>*talyseur acide" solide au cours de l'opération de précipitation de l'acide aspartique;*</u>

selon un rapport molaire "catalyseur acide" / aminoacide d'au moins 0,001

**2.** Procédé selon la revendication 1) caractérisé en ce que le "catalyseur acide" est

. l'acide méthane sulfonique, benzène sulfonique, trifluorométhanesulfonique, dodécylbenzènesulfonique, paratoluènesulfonique, l'acide cysteique
. l'acide sulfurique anhydre ou hydraté, l'oléum, les sulfates acides de potassium, lithium, sodium ou d'ammonium quaternaire, $SO_3$,
. le sulfate d'ammonium
. les mélanges sulfate neutre de métal alcalin / acide sulfurique, sulfate neutre de métal alcalin ou atcalinoterreux / acide phosphorique ou pyrophosphorique, selon un rapport molaire acide/sel neutre de l'ordre de 0,5/1 à 10/1,
. l'hydrogénophosphate de potassium , sodium, lithium ou d'ammonium quaternaire
. HCl, $PCl_3$ , $PCl_5$ , $POCl_3$, chlorure de cyanuryle
. $SiCl_4$ , $CH_3SiCl_3$
. l'acide salicylique, les acides chloracétiques
. la phosphométhylglycine, l'acide éthylphosphonique
. le chlorhydrate de l'acide aspartique, les sels de l'acide aspartique et de l'acide sulfurique, méthane sulfonique, paratoluène sulfonique
. le chlorhydrate de l'acide polyanhydroaspartique
. $AlCl_3$, $BF_3$, $ZnCl_2$

**3.** Procédé selon l'une quelconque des revendications 1) ou 2), caractérisé en ce que l'aminoacide mis en oeuvre est l'acide aspartique ou l'acide glutamique pris seuls ou en mélange entre eux dans des proportions quelconques ou en mélange avec un aminoacide autre.

**4.** Procédé selon l'une quelconque des revendications 1) à 3) caractérisé en ce que l'opération de polycondensation thermique est réalisée à une température de 100 à 250°C.

**5.** *Procédé selon l'une quelconque des revendications 1) à **4**), caractérisé en ce que le rapport molaire "catalyseur acide" / aminoacide est de 0,001 à 0,15 lorsque le "catalyseur acide" est constitué d'un sel acide ou d'un précurseur de sel acide, et de 0,001 à 0,05 lorsque le "catalyseur acide est différent d'un sel acide ou d'un précurseur de sel acide.*

**6.** *Procédé selon la revendication **5**), caractérisé en ce que le rapport molaire "catalyseur acide"/aminoacide est de 0,005 à 0,15 lorsque le "catalyseur acide" est constitué d'un sel acide ou d'un précurseur de sel acide, et de 0,005 à 0,05 lorsque le "catalyseur acide est différent d'un sel acide ou d'un précurseur de sel acide.*

**7.** Procédé selon l'une quelconque des revendications 1) à **6)** caractérisé en ce que le polyimide obtenu par thermocondensation est hydrolysé en un sel polypeptidique par addition d'un agent basique, ledit sel étant ensuite éventuellement neutralisé en un acide polypeptidique par addition d'un acide minéral ou organique.

## Claims

**1.** Process for preparing polyimides or polypeptide hydrolysates thereof with a biodegradability of at least 80% (according to AFNOR standard T90-312 or ISO international standard 7827), by bulk thermal polymerization of at least one amino acid, in the presence of at least one "acid catalyst" chosen from

• sulphuric acid, nitric acid, phosphorous acid, sulphurous acid, silicic acid, sulphonic acid, organosulphonic acids containing less than 50 carbon atoms, organophosphonic acids and organocarboxylic acids with a $pk_a$

of less than or equal to 5;
- precursors of these acids;
- salts of these acids and of an amino acid which may be identical to or different from that or those used;
- salts of these acids and of a polyimide derived from the polycondensation of at least one amino acid which may be identical to or different from that or those used;
- hydrochloric acid precursors or hydrofluoric acid precursors;
- salts of hydrochloric acid and of an amino acid which may be identical to or different from that or those used, when the amino acid to be polycondensed is other than glutamic acid;
- salts of hydrochloric acid and of a polyimide derived from the polycondensation of at least one amino acid which may be identical to or different from that or those used;
- acid salts of sulphuric acid, phosphoric acid or phosphorous acid or precursors thereof;
- phosphoric acid precursors other than phosphorus pentoxide or polyphosphoric acids; and
- Lewis acids;

optionally followed by hydrolysis,
the said process being characterized in that the thermal polycondensation step is carried out with a reaction medium which remains in pulverulent or friable form throughout the polycondensation operation, in which reaction medium the "acid catalyst" has been distributed homogeneously by

- slurrying a mixture of amino acid and of solid or liquid acid catalyst with water (or any other volatile liquid diluent), removal of the water (or of the diluent) by evaporation under vacuum or at atmospheric pressure, followed by grinding of the mass obtained;
- or, when the amino acid is aspartic acid, preparation of the aspartic acid by reaction of an organic or inorganic acid and of ammonium aspartate, with incorporation, by crystallization, of the solid "acid catalyst" during the aspartic acid precipitation operation;

in an "acid catalyst"/amino acid molar ratio of at least 0.001.

2. Process according to claim 1, characterized in that the "acid catalyst" is

- methanesulphonic acid, benzenesulphonic acid, trifluoromethanesulphonic acid, dodecylbenzenesulphonic acid, para-toluenesulphonic acid or cysteic acid,
- anhydrous or hydrated sulphuric acid, oleum, hydrogen sulphates of potassium, lithium, sodium or quaternary ammonium, and $SO_3$,
- ammonium sulphate,
- neutral alkali metal sulphate/sulphuric acid, neutral alkali metal or alkaline-earth metal sulphate/phosphoric or pyrophosphoric acid mixtures, in an acid/neutral salt molar ratio of about from 0.5/1 to 10/1,
- potassium, sodium, lithium or quaternary ammonium hydrogen phosphate,
- HCl, $PCl_3$, $PCl_5$, $POCl_3$ or cyanuryl chloride,
- $SiCl_4$ or $CH_3SiCl_3$,
- salicylic acid and chloroacetic acids,
- phosphomethylglycine and ethylphosphonic acid,
- aspartic acid hydrochloride, salts of aspartic acid and of sulphuric, methanesulphonic or para-toluenesulphonic acid,
- polyanhydroaspartic acid hydrochloride,
- $AlCl_3$, $BF_3$ or $ZnCl_2$.

3. Process according to either of claims 1 and 2, characterized in that the amino acid used is aspartic acid or glutamic acid taken alone or as a mixture with each other in any proportions or as a mixture with another amino acid.

4. Process according to any one of claims 1 to 3, characterized in that the thermal polycondensation operation is carried out at a temperature of from 100°C to 250°C.

5. Process according to any one of claims 1 to 4, characterized in that the "acid catalyst"/amino acid molar ratio is from 0.001 to 0.15 when the "acid catalyst" consists of an acid salt or a precursor of an acid salt, and from 0.001 to 0.05 when the "acid catalyst" is other than an acid salt or a precursor of an acid salt.

6. Process according to claim 5, characterized in that the "acid catalyst"/amino acid molar ratio is from 0.005 to 0.15 when the "acid catalyst" consists of an acid salt or a precursor of an acid salt, and from 0.005 to 0.05 when the "acid catalyst" is other than an acid salt or a precursor of an acid salt.

7. Process according to any one of claims 1 to 6, characterized in that the polyimide obtained by thermal condensation is hydrolysed to a polypeptide salt by addition of a basic agent, said salt then being optionally neutralized to a polypeptide acid by addition of a mineral or organic acid.


**Patentansprüche**

1. Verfahren zur Herstellung von Polyimiden oder ihren polypeptidischen Hydrolysaten mit einer Biodegradabilität von mindestens 80 % (gemäß der Norm AFNOR T90-312 oder der Internationalen Norm ISO 7827) durch thermische Polymerisation in Masse von mindestens einer Aminosäure und in Anwesenheit von mindestens einem "sauren Katalysator", ausgewählt unter

   . Schwefelsäure, Salpetersäure, Phosphorsäure, schwefliger Säure, Kieselsäure, Sulfonsäure, den organischen Sulfonsäuren mit weniger als 50 Kohlenstoffatomen, den organischen Phosphonsäuren, den organischen Carbonsäuren, die einen $pK_a$-wert von unterhalb oder gleich 5 aufweisen;
   . den Vorläufern dieser Säuren;
   . den Salzen von diesen Säuren und einer Aminosäure, die ähnlich oder unterschiedlich zu der oder den eingesetzten ist,
   . den Salzen von diesen Säuren und einem Polyimid, abgeleitet von der Polykondensation von mindestens einer Aminosäure, die ähnlich oder unterschiedlich zu der oder den eingesetzten ist;
   . den Vorläufern von Chlorwasserstoffsäure oder Fluorwasserstoffsäure;
   . den Salzen von Chlorwasserstoffsäure und einer Aminosäure, die ähnlich oder unterschiedlich zu der oder den eingesetzten ist; wenn die zu polykondensierende Aminosäure anders ist als Glutaminsäure;
   . den Salzen von Chlorwasserstoffsäure einem Polyimid, abgeleitet von der Polykondensation von mindestens einer Aminosäure, die ähnlich oder unterschiedlich zu der oder den eingesetzten ist;
   . den sauren Salzen von Schwefelsäure, Phosphorsäure oder phosphoriger Säure oder ihren Vorläufern;
   . den Vorläufern von Phosphorsäure, die anders sind als Phosphorsäureanhydrid oder die Polyphosphorsäuren; und
   . den Lewis-Säuren;

   sowie gegebenenfalls anschließende Hydrolyse,
   wobei das genannte Verfahren dadurch gekennzeichnet ist, daß die Stufe der thermischen Polykondensation in einem Reaktionsmedium realisiert wird, das während der gesamten Dauer der Operation der Polykondensation pulverförmig oder krümelig bleibt, und in dem Reaktionsmedium der "saure Katalysator" in homogener Weise verteilt wurde, durch

   - Anteigen einer Mischung von Aminosäure und festem oder flüssigem sauren Katalysator durch Wasser (oder jedes andere flüchtige, flüssige Verdünnungsmittel), Entfernung des Wassers (oder des Verdünnungsmittels) durch Verdampfen unter Vakuum oder bei atmosphärischem Druck, anschließendes Zerkleinern der erhaltenen Masse;
   - oder in dem Fall, wo die Aminosäure Asparaginsäure ist, Herstellung der Asparaginsäure durch Reaktion einer organischen oder anorganischen Säure und Ammoniumaspartat, mit Eintragen durch Kristallisation des festen "sauren Katalysators" im Verlauf der Fällungsoperation der Asparaginsäure; gemäß einem molaren Verhältnis "saurer Katalysator"/Aminosäure von mindestens 0,001.

2. Verfahren nach Anspruch 1, dadurch gekennzeichnet, daß der "saure Katalysator" ist:

   . Methansulfonsäure, Benzolsulfonsäure, Trifluormethansulfonsäure, Dodecylbenzolsulfonsäure, para-Toluolsulfonsäure, Cysteinsäure,
   . wasserfreie oder hydratisierte Schwefelsäure, Oleum, die sauren Sulfate von Kalium, Lithium, Natrium oder quaternärem Ammonium, $SO_3$,
   . Ammoniumsulfat,
   . die Mischungen neutrale Sulfate von Alkalimetall/Schwefelsäure, neutrale Sulfate von Alkalimetall oder Erdalkalimetall/Phosphorsäure oder Pyrophosphorsäure, gemäß einem molaren Verhältnis Säure/neutrales Salz in der Größenordnung von 0,5/1 bis 10/1,

- Hydrogenphosphate von Kalium, Natrium, Lithium oder quaternärem Ammonium,
- HC1, $PCl_3$, $PCl_5$, $POCl_3$, Cyanurylchlorid,
- $SiCl_4$, $CH_3SiCl_3$,
- Salicylsäure, die Chloressigsäuren,
- Phosphomethylglycin, Ethylphosphonsäure,
- Asparaginsäure-Hydrochlorid, die Salze von Asparaginsäure und Schwefelsäure, Methansulfonsäure, para-Toluolsulfonsäure,
- Polyanhydroasparaginsäure-Hydrochlorid,
- $AlCl_3$, $BF_3$, $ZnCl_2$.

3. Verfahren nach irgendeinem der Ansprüche 1 oder 2, dadurch gekennzeichnet, daß die eingesetzte Aminosäure Asparaginsäure oder Glutaminsäure ist, allein genommen oder in Mischung untereinander, in irgendwelchen Verhältnissen oder in Mischung mit einer anderen Aminosäure.

4. Verfahren nach irgendeinem der Ansprüche 1 bis 3, dadurch gekennzeichnet, daß die Operation der thermischen Polykondensation bei einer Temperatur von 100 °C bis 250 °C realisiert wird.

5. Verfahren nach irgendeinem der Ansprüche 1 bis 4, dadurch gekennzeichnet, daß das molare Verhältnis "saurer Katalysator"/ Aminosäure 0,001 bis 0,15 beträgt, wenn der "saure Katalysator" aus einem sauren Salz oder einem Vorläufer von saurem Salz besteht, und 0,001 bis 0,05 beträgt, wenn der "saure Katalysator" von einem sauren Salz oder einem Vorläufer von saurem Salz verschieden ist,

6. Verfahren nach Anspruch 5, dadurch gekennzeichnet, daß das molare Verhältnis "saurer Katalysator"/Aminosäure 0,005 bis 0,15 beträgt, wenn der "saure Katalysator" aus einem sauren Salz oder einem Vorläufer von saurem Salz besteht, und 0,005 bis 0,05 beträgt, wenn der "saure Katalysator" von einem sauren Salz oder einem Vorläufer von saurem Salz verschieden ist.

7. Verfahren nach irgendeinem der Ansprüche 1 bis 6, dadurch gekennzeichnet, daß das durch Thermokondensation erhaltene Polyimid durch Zugabe eines basischen Mittels zu einem polypeptidischen Salz hydrolysiert wird, wobei das genannte Salz anschließend gegebenenfalls durch Zugabe einer Mineralsäure oder organischen Säure zu einer polypeptidischen Säure neutralisiert wird.